# EUROPEAN PATENT SPECIFICATION

(11) **EP 0 917 366 B1**
(45) Date of publication and mention of the grant of the patent: **20.07.2005**
(21) Application number: 98122662.4
(22) Date of filing: 26.11.1991
(51) Int. Cl.: H04N 7/16, H04N 7/173

(54) **CATV pay per view interdiction system and apparatus**
Vorrichtung zum Sperren eines Kabelfernseh-Pay-per-View-Programmsystems
Appareil destiné à un système d'interdiction de télédistribution fonctionnant suivant le principe du téléspectateur payeur

(30) Priority: 27.11.1990 US 618745; 27.11.1990 US 625901
(43) Date of publication of application: 19.05.1999
(62) Divisional of application: 92902199.6
(73) Proprietor: BLONDER TONGUE LABORATORIES, INC., Old Bridge New Jersey 08857 (US)
(72) Inventor: Harney, Michael P., Atlanta, GA 30307 (US); Parikh, Himanshu R., Duluth, GA 30096 (US); West, Lamar E., Jr., Maysville, GA 30558 (US); Farmer, James O., Lilburn, GA 30247 (US); Schutte, Mark J., Sugar Hill, GA 30518 (US)
(74) Representative: Quinterno, Giuseppe

(56) References cited:
- WO-A-85/05523
- US-A- 4 580 161

## Description

### TECHNICAL FIELD

The present invention generally relates to a service system for use in a CATV system for servine or providing service to one or more subscribers.

### BACKGROUND OF THE INVENTION

In conventional CATV systems, certain premium channels may be offered to authorized subscribers for an additional monthly fee or on a selective basis through the implementation of so-called impulse pay-per-view (IPPV) technology. Various techniques have been developed in order to ensure that events carried on these premium channels are available only to those subscribers authorized to receive the events. One technique developed for premium channel control is an interdiction system in which an interfering signal is introduced into the television signal at a subscriber's location. Such an interdiction system is described in U.S. Patent No. 4,912,760. A typical interdiction system includes a pole-mounted unit located outside or "off" the subscriber's premises and which is designed to serve at least one and up to four or more subscribers. The unit contains at least one microprocessor controlled oscillator and switch control electronics to secure several premium television channels. Control is accomplished by injecting an interfering or jamming signal into unauthorized channels from the pole-mounted unit. To improve efficiency and to save costs, one oscillator may be used to jam several premium television channels. This technique reduces the amount of hardware required and maximizes system flexibility. The oscillator output jamming signal frequency is periodically moved from channel to channel. Consequently, the oscillator is frequency agile and hops from jamming one premium channel frequency to the next.

Most embodiments promoted by manufacturers of interdiction systems consist of a pole-mounted or side of building mounted enclosures located outside the subscriber's premises designed to serve four or more subscribers. This enclosure contains at least one microprocessor controlled oscillator and switch control electronics to secure several television channels. Control is accomplished by injecting an interfering or jamming signal into unauthorized channels from this enclosure. U.S. Patent No. 4,910,791 discloses a method of calibrating a remote pilot receiver/transmitter in a bidirectional communications system by transmitting a calibration signal to the remote pilot.

Cost reduction is achieved in the systems discussed above, i.e. trap and interdiction systems, by providing shared housings outside the subscribers' premises for each of a plurality of subscriber units, for example, four such units and common circuitry associated with the several subscriber units. For example, common control circuitry is shown in Figure 2 of U.S. patent 4,612,760. These housings are mounted out-of-doors on poles or in pedestals for serving especially suburban subscribers. Further details of such housing apparatus is also provided by U.S. Patent No. 4,963,966. Also, indoor housings are known from so-called multiple dwelling unit systems where a cable television system supplies service to apartment buildings or condominium complexes.

In more suburban and rural environs, a single port (subscriber) unit may be provided which may, for example, be mounted to the side of an exterior of a subscriber's home.

Interdiction systems advantageously provide a ready access by a cable operator to the equipment since entry into a subscriber's house is not necessary. Further, since the interdiction unit is located outside a subscriber's premises, pirates have reduced opportunity to examine and effect changes to system circuitry in attempts to defeat the premium channel controls implemented by the system operator.

However, in most, if not all CATV systems, situations arise when it is desirable or necessary to provide a return or reverse path from a particular subscriber to a headend. A number of special services may be realized over a cable television distribution plant if a reverse path is provided. Such services include remote utility meter reading, fire and burglar alarm, energy management, home shopping, subscriber polling or voting, educational and pay-per-view television services. However, in the 1970's and 1980's the preponderance, if not most, subscriber service providing equipment was physically located on the subscriber's premises. Consequently, little attention was paid to a problem of providing reverse path transmission in an off-premises subscriber equipment environment, such as exists in a CATV interdiction system.

One advance in the art of reverse path transmission from the early days of design of two way addressable cable television systems was the two way distribution amplifier. An arrangement is provided for splitting the cable television spectrum into forward and reverse frequency bands. According to a so-called sub-split distribution plant, the frequency band of 54-550 megahertz is reserved for forward, downstream transmission from the headend to the subscriber and the band from 5-30 megahertz is reserved for reverse or upstream transmission. Included in the typical distribution amplifier are diplex filters or diplexers which provide separate paths for the forward and reverse directions on one side and a path for a combined frequency spectrum on the other side.

Typically, a subscriber decoder/converter is provided with a keyboard or other data entry means through which device a subscriber may enter, for example, a home shopping selection or a pay-per-view service request. For remote meter reading, alarm, and energy management services, sensing, measurement, energy control and other devices are appropriately dispersed in a subscriber's premises. Access to the cable distribution plant is provided by a data transmission modem for both subscriber service request data, entered via the keyboard, and utility or alarm data. The data is typically transmitted as frequency shift keyed or phase shift keyed data modulated on a carrier in the 5-30 megahertz band.

As an alternative to FSK or PSK data transmission, spread spectrum techniques and alternative arrangements such as telephone return have also been proposed in cable television systems primarily because of the notorious susceptibility of the 0-30 megahertz band to noise and other interferences. The problems involved with providing a reverse path data transmission system still require solution. The problems which remain unsolved include: to minimize the sophistication of subscriber premise equipment, if any, for special service applications, to effectively control off-premise service providing equipment, and to return data to the headend in a noisy, interference prone environment, the 0-30 MHz transmission band.

One situation in which some type of reverse path is needed for interdiction systems is in pay-per-view and impulse pay-per-view technology. This technology allows a subscriber to choose a presentation such as a first-run movie or a prize fight on a selective basis when the subscriber desires to view such an event. In many CATV systems, a pay per view event is ordered through the use of telephone calls from subscribers to the cable operator who then authorizes the subscriber to receive the event, usually by sending an authorization signal which activates a descrambler in a set top converter or terminal used by the subscriber. Since time is required to allow the cable operator to program the set top converters to allow viewing of the event, the event must be ordered well in advance of the time that they are broadcast in order to ensure reception. Other systems utilize the set top converter as a subscriber interface. The set top converter is tuned by the subscriber to select the premium channel, then the subscriber enters his or her authorization number. The set top converter then activates its descrambler to allow the broadcast on the selected premium channel to be received. Information regarding the purchase is stored in the set top converter. The converter interface is provided with telephone connection circuits which place calls to the cable operator (or reverse path RF transmitters which transmit to the cable operator) and transfer data as to the pay per view events which were selected. Although such set top converters interfaces provide IPPV capability, they are not suitable when, instead of set top converters, off premises equipment deliver broad band signals to the subscribers. The off premises equipment has no knowledge of which channel the subscriber is watching and cannot relay billing information to the cable operator as to the events which have been selected.

WO85 05523 A discloses a cable TV distribution system with a pay per view interdiction system to serve a plurality of subscribers, where the subscriber equipment comprises data entry devices for receiving input data, and with service providing equipment including a data receiver for receiving the command transmitted from the subscriber equipment, a data processor for controlling authorization of service to the subscriber equipment.

While arrangements as mentioned above are known for providing on-premises equipment for transmitting data over a reverse path to a headend, there remains a requirement for off-premises reverse path equipment, responsive to a minimum of on-premises equipment for controlling off-premises service providing system equipment such as descrambling or decoding, trap or interdiction system equipment. Furthermore, there remains a requirement in the art of design of cable television equipment for off-premises reverse path equipment responsive to, and which may be shared in common by, a plurality of subscribers and thus provide a cost-effective efficient arrangement. Also, there exists a requirement in the art for off-premises reverse path equipment to provide a bi-directional transmission path to each subscriber and a bi-directional data transmission path toward the headend (relying on existing in-band or out-of-band downstream data transmission).

### SUMMARY OF THE INTENTION

It is an object of the present invention to provide efficient, cost-effective off-premises cable television reverse path equipment for providing a reverse, upstream transmission path from a subscriber to a headend of a cable television system for reporting, for example, pay per view transactions.

It is another object of the present invention to provide a subscriber terminal which allows a subscriber to make IPPV purchases and which is simple in construction.

It is a further object of the present invention to provide an off-premises cable television reverse path signal combining system for combining a plurality of reverse path signals for temporary storage at the system apparatus for service authorization and for subsequent transmission to a cable television system headend.

In accordance with the present invention these and other objects are achieved by the system defined in claim 1.

The advantages and features of the present invention will be discussed in the following detailed description of the present invention with reference to the drawings.

### BRIEF DESCRIPTION OF THE DRAWINGS

Figure 1 is an overall system block diagram of a typical two way cable distribution plant showing an off- or on-premises cable television system including two way distribution amplifiers 34 in which system the present off-premises CATV impulse pay per view system may be implemented, i.e. an interdiction cable television system.
Figure 2 is a block schematic diagram of an addressable common control circuit for a plurality of provided subscriber modules of an off-premises interdiction system comprising a broadband signal tap, a diplexer connected to the tap, a microprocessor, a data receiver and decoder, and an automatic gain control circuit.
Figure 3 is a block schematic diagram of one subscriber module of an off-premises interdiction system comprising a microprocessor 300 for selectively controlling the jamming of unauthorized services to a subscriber, associated jamming equipment and a diplexer.
Figure 4 is a block schematic diagram of the interrelationship between a service module which will be described in detail in connection with Figure 6. one of four subscriber modules according to Figure 3 and the seizure board of common control circuitry of Figure 2.
Figure 5 is a block schematic diagram of on-premises service transmission equipment according to the present invention, its connection being shown between the drop cable to an off-premises interdiction unit and an on-premises cable-ready television receiver, being also shown in Figure 3.
Figure 6 is a flow diagram illustrating the steps for buying and cancelling a buy in accordance with the present invention.
Figure 7 is a schematic block diagram of a reverse path signal combining system according to the present invention for providing impulse pay-per-view and other services, in which embodiment a subscriber possessing the transmitter of Figure 5 may control off-premises equipment comprising the common circuitry of Figure 2, the service module of Figure 7 and the subscriber module according to Figure 3.

### DETAILED DESCRIPTION OF THE PREFERRED EMBODIMENT

The reverse path data transmission system of the present invention will be discussed in the context of the off-premises cable television channel interdiction apparatus disclosed in U.S. Patent No. 4,912,760. The present invention is not limited to reverse path data transmission apparatus for an interdiction system but is also applicable to such apparatus provided generally in any off-premises system, for example, positive and negative trap systems, sync suppression systems and in any other system in which service is provided to a plurality of subscriber units from an off-premises site.

A detailed discussion of the interdiction system in which the present invention may be implemented is also provided in U.S. Patent No. 4,963,966. Topics related to interdiction systems such as jamming signal gain and frequency control will not be addressed in detail herein.

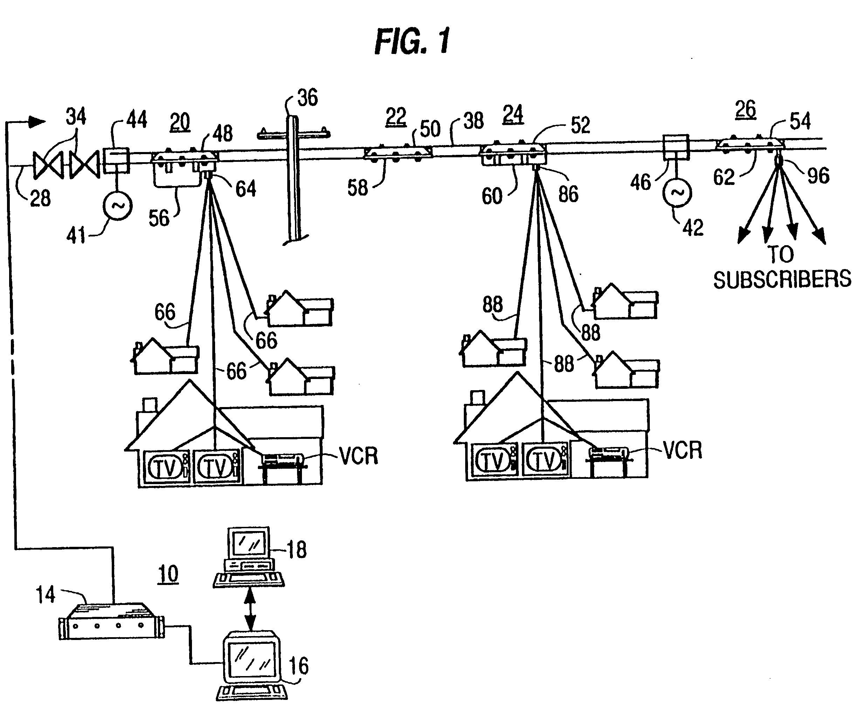

Figure 1 is a general block diagram of a cable television system. Cable television system as used herein refers to all systems involving the transmission of television signals over a transmission medium (fiber optic cable or coaxial cable) to remote locations. For example, a cable television system may comprise a community antenna television distribution system, a satellite signal distribution system, a broadcast television system, a private cable distribution network, either industrial or educational, or other forms of such systems. Each remote location of a television receiver may comprise the location of a particular subscriber to a subscription television service, plural subscribers, single subscribers having plural television receivers or private locations in a private cable distribution network. Consequently, the term subscriber as used herein refers to either a private subscriber or a commercial user of the cable television system.

Headend 10 is a connecting point to a serving cable or trunk 28 for distributing television channels over feeder lines to drops 66, 88 and finally to subscriber locations. For reference purposes, an Electronic Industries Association (E.I.A.) standard cable television frequency allocation scheme is employed and referred to herein. However, by means of the following disclosure of the present invention, one may apply the principles to other known standard or non-standard frequency allocations. Further, a National Television Subcommittee (N.T.S.C.) standard composite television signal at baseband is generally considered in the following description. However, the principles of the present invention apply equally to other standard and non-standard baseband standard definition and proposed high definition television signal formats. Also, the principles of the present invention are not limited to television services furnished from a headend but may include utility meter reading, burglar alarm reporting, digital or other stereophonic audio delivery systems, video or telephonic services and the like.

Headend 10 typically comprises a source of television programming (not shown). The television program source may be a satellite television receiver output, a program produced by a television studio, program material received over a microwave or broadcast television link, a cable television link output, or any other source of television programming consistent with the present invention. The program source material need not be limited to conventional television but may comprise teletext, videotext, program audio, utility data, or other forms of communication to be delivered to a remote location over the serving cable or trunk line 28 and subsequently over feeder lines and, then, drop lines 66, 88. Addressing to provide different levels of service is obtained with a computer system including a system manager computer 16 and a billing computer 18.

Conventionally, trunk line 28, feeder lines, and drop lines 66, 88 are constructed of coaxial cable. For higher performance, any one of these lines could be a fiber optic cable. Due to the cost of the installation and the need for a high quality initial transmission from headend 10, trunk line 28 is typically the only line constructed of fiber optic cable.

Program material provided by the source may be premium or otherwise restricted or desirably secured from receipt at unauthorized receiver locations. It may be provided over any channel of the 50-550 MHz (or larger band) cable television spectrum. "Premium channel" or "premium programming" as used herein refers to a channel or program which is secured from unauthorized receipt either because of its premium or restricted status.

Normally, all premium programming in cable television systems is scrambled. However, in accordance with interdiction system technology, premium programming is transmitted in the clear, and interdiction is applied as at off-premises interdiction apparatus 20 to jam reception of unauthorized premium programming. For example, off-premises apparatus 24 of housing 60 may be coupled to subscribers having on-premises converter/decoders or decoders and off-premises apparatus housing 58 may be utilized for coupling to new subscribers to the system. Off-premises apparatus 20, 22, 24, and 26 also form part of a reverse data transmission path as will be discussed in greater detail below. Off premises apparatus 20, 22, 24, and 26 respectively comprise housings or enclosures 56, 58, 60, and 62 and covers 48, 50, 52, and 54.

It is likely that cable systems will gradually make the transition to an interdiction system, for example, as new subscribers are added. During a transition period, headend 10 may provide scrambled television programming as well as premium programming in the clear and a scrambler may be provided as long as converters/decoders remain in the system for unscrambling scrambled program transmission. For example, off premises apparatus 24 may be coupled to subscribers still having on-premises converters/decoders and off premises unit 22 may be utilized to couple new subscribers to the system. In certain instances, converter/decoders at subscriber locations may later be entirely replaced by interdiction apparatus of the present invention. Descrambling or decoding equipment may also be provided at an off-premises housing.

Headend 10 includes an addressable data transmitter 14 for transmitting global commands and data downstream to all subscribers or addressed communications for reception by a particular subscriber. Such forward data transmission may be conducted over a separate data carrier from the cable television spectrum, for example, at 108.2 megahertz. Forward data transmission may also be over an unused default channel from the television spectrum. Global commands generally take the form of operation code and data while addressed communications further include the unique address of a particular subscriber.

In an alternative embodiment, forward data communications may take the form of in-band signals sent with a television channel superimposed, for example, upon an audio carrier during a special time period, for example, a period corresponding to the vertical blanking interval of the associated video signal. Such data communications further complicate data reception at interdiction apparatus and are desirably eliminated. However, in-band signaling may be required for the operation of certain converter/decoders known in the art.

Thus, commands to authorize service to a particular subscriber may be transmitted in-band or on a separate data carrier and typically involve transmitting a unique address of a particular subscriber unit, a command, and data. Decoders in the system receive the command, decode it, determine if the command is to be acted on, and if so perform the desired action such as provide a subscriber with pay-per-view credits or generally authorize services. Consequently, headend 10, cable television serving cable or trunk line 28, and converter/decoders and television receivers (TV's or VCR's) at a typical subscriber premises comprise a typical known cable television system. Channel program or authorization data is transmitted via an addressable data transmitter 14 over a trunk line 28 to feeder lines with interspersed signal amplifiers 34 and power supply equipment 41, 42, 44, 46 provided as required. The serving signal is dropped via drops 66, 88 to a subscriber location at a pole 36 or from a pedestal at underground cable locations.

Off premises unit 24 may be connected via connector 86 and drop 88 to a conventional converters/decoders which serve several functions. Responsive to an addressed communication from headend transmitter 14, channel or program authorization data is updated in an authorization memory if the address associated with the addressed communication matches a unique address of the subscriber decoder. For example, the subscriber address may comprise a plurality of bits over and above the actual number of subscribers in a system, the additional bits insuring the security of the address. The premium channel or program is then stored in the authorization memory of the converter/decoder. Television programming is normally converted to an otherwise unused channel such as channel 3 or 4 of the television spectrum by a converter portion of converter/decoder. Its premium status is checked against the data stored in authorization memory. If the programming is authorized, the decoder portion of the converter/decoder is enabled to decode authorized scrambled premium programming.

The provided television receiver may be a conventional television receiver or may be a so-called cable ready television receiver. Because of the advent of cable ready television receivers, there is no longer a requirement at a subscriber premises for the converter portion of a converter/decoder because a converter is built into such television receivers.

In accordance with a cable television system provided with interdiction or other off-premises apparatus, units 20, 22, 24, and 26 are mounted on a strand 38 supporting the cable to a pole 36, or provided via a pedestal, as is shown more particularly in U.S. Patent No. 4,963,966. The units may also be mounted indoors in an equipment closet of a multiple dwelling unit or to the side of a subscriber's premises. Inside the units is common control circuitry for tapping into the broadband television and data transmission spectrum. Referring to the pole 36, there is shown a strand-mounted apparatus 56 serving four drops 66 to subscribers via connector 64. In practice, four or more subscribers and up to four or more drops 66 may be served by interdiction apparatus 20. In addition to the common control circuitry, four or more plug-in subscriber modules may be provided for an off-premises housing. Also, according to the present invention, additional services requiring two way data transmission such as subscriber polling, home shopping, burglar alarm, energy management and pay-per-view services may be provided via four or more service modules comprising reverse path signal combining circuitry of apparatus 56.

Desirably, all cable television equipment may be removed from the subscriber premises. However, for the provision of certain additional services, some on-premises equipment is unavoidable. In accordance with the present invention and as discussed in greater detail below, a subscriber transaction terminal apparatus in a subscriber's premises simply comprises a subscriber-controlled data transmitter for transmitting data on the subscriber drop 66 in only one direction, namely, to interdiction apparatus 20. For purposes of this description, the subscriber premises will be assumed to include at least one cable ready conventional television receiver, TV or VCR. Consequently, subscriber equipment need not comprise a tunable converter for converting a received cable television channel to an unused channel such as channel 3 or 4. The subscriber transaction terminal device comprises data entry or sensing means, data confirmation means. i.e., a display or alarm, if required, and a data transmitter coupled between the drop cable and the cable ready television receiver.

Power for off-premises apparatus 20 may be provided over the cable from the headend direction via power supplies 41,42 or be provided via the subscriber drop 66 or by a combination of such means. Forseeably, power may be even provided by rechargeable means such as solar cells or other external or replaceable internal sources such as batteries. The subscriber transaction terminal equipment according to the invention described by the present application is preferably battery powered.

All off-premises service providing apparatus 20, 22, 24, and 26 may be secured in a tamper-resistant housing or otherwise secured as described by U.S. 4,963.966 or secured in a locked equipment closet of an apartment complex. If located in a place exposed to the elements, the housing should be water-tight. Also, the housing should be designed to preclude radio frequency leakage.

Interdiction apparatus 20 is uniquely addressable by headend 10 just as is a known converter/decoder. If two bits of a plural bit unique subscriber address are associated with uniquely identifying one plug-in slot for one of four subscriber modules, common control circuitry may be uniquely addressed with remaining address data not used to secure the data communication. Just as premium programming is transmitted in the clear and since no data communication is necessarily required with a subscriber premises, a subscriber address need not be transmitted in a secure form. Nevertheless, address security may be desirable so long as converter/decoders or other unique address requisite equipment is provided at a premises.

Interdiction apparatus 20 comprises addressable common control circuitry, a plug-in service module and up to four (or more) plug-in subscriber modules. Upon receipt of subscriber specific premium program, subscriber credit or channel authorization data, the data are stored at memory of common control circuitry of off-premises interdiction apparatus 20.

Interdiction apparatus 20 further comprises a diplexer for providing a forward transmission path which is coupled to automatic gain control circuitry of the common control circuitry. The common control circuitry forwards jamming frequency control data to a subscriber module. Channel interdiction circuitry associated with each subscriber module then selectively jams unauthorized premium programming dropped via a particular drop 66 to a particular subscriber. Consequently, interdiction apparatus 20 is reasonably compatible with downstream addressable authorization data transmission known in the art. No scrambling of premium channels (and no resulting artifacts) is necessary or desirable. Furthermore, no additional forms of service security are necessary such as channel encryption, in-band channel or tier verification or other security measures. The would-be service pirate must attempt to remove a particular pseudo-randomly timed jamming signal placed at a varying frequency or seek to tamper with the off-premises interdiction apparatus 20 or derive a signal from shielded and bonded cables which should likewise be maintained secure from radio frequency leakage. In addition, other tamper protection may be provided for apparatus 20.

Two way data transmission is provided via a so-called sub-split frequency spectrum comprising the band 5-30 megahertz for upstream, reverse path transmission toward headend 10 and a spectrum from 54-550 megahertz for downstream forward transmission. In particular, an amplitude shift keyed data transmission signal at approximately 5 MHz is used for communication on drop 66, while a binary phase shift keyed signal is used for upstream data transmission in the T8 band to headend 10. Distribution amplifiers 34 distributed along the distribution plant according to known prior art design techniques separate and separately amplify the two transmission bands. They are distributed along the transmission path in a manner so as to preclude the carrier-to-noise ratio of either transmission path from being too low. Even with such design techniques, the return path is highly susceptible to interference at any point.

Also, at a headend 10, there is located a radio frequency data receiver and data processor for receiving data transmissions from the off- or on-premises subscriber equipment.

The common control circuitry of interdiction apparatus 20 will now be described with reference to the block diagram Figure 2 for serving four subscriber modules in accordance with the block diagram Figure 3 and service modules according to Figure 7. Referring particularly to Figure 2, feeder cable 28 is shown entering off-premises interdiction apparatus 20 at FEEDER IN and leaving at FEEDER OUT. Power PWR may be provided via the feeder cable, by means of the subscriber drop or locally by internal or external means. Depending on the source of power PWR, input power may be of alternating or direct current.

A directional coupler 210 which may be in the form of a plug-in module taps into the broadband serving cable 28. A broadband of radio frequency signals is thus output to highpass filter 220 of diplex filter 295. Highpass filter 220 passes a downstream band of frequencies, for example, 54-550 megahertz comprising at least the cable television spectrum and any separate data carrier frequency, such as 108.2 MHz, and blocks the upstream band of frequencies, for example, 5-30 megahertz (in a bi-directional application). For an off-premises interdiction system, the cable television spectrum may particularly comprise a narrower frequency band from about 54 MHz to 350 MHz.

Lowpass or bandpass filter 221 passes at least the 0-30 MHz spectrum and more particularly a pass band comprising the T8 band from approximately 14-18 MHz. As will be more particularly described herein, one of twenty-three data channels may be selected for upstream data transmission from within the T8 band to avoid noisy regions of the spectrum.

Circuitry associated with broadband signal "seizure" from the distribution cable 28 may be conveniently mounted on a single board, conveniently named a seizure board of interdiction apparatus 20. more particularly described in Figure 15 of U.S. Patent No. 4,963,966, but described in general terms herein as at least comprising the directional coupler 210 and diplex filter 295 of Figure 2.

A common automatic gain control circuit as disclosed in Figure 2 comprises variable attenuator 230, RF amplifier 233, directional coupler 232, and AGC control circuit 231. This automatic gain control circuit appropriately regulates the broadband RF signal power to fall within established limits. The common circuitry of Figure 2 is collocated or closely located to the subscriber modules which will be further described in connection with Figure 3 and may be contained in the same housing with the service units for each subscriber which will be described in connection with Figure 7.

Also connected to directional coupler 232 is a data receiver 240 for receiving downstream forward data transmissions from the addressable data transmitter 14 located at headend 10. Data receiver 240 receives data transmitted, for example, over a data carrier of 108.2 megahertz and provides unprocessed data to data decoder 250. In accordance with an established protocol and as briefly described above, such data may be in the form of an operation code (command), a subscriber unique address and associated data. Data decoder 250 processes the data and provides the separately transmitted data to microprocessor 260 for further interpretation in accordance with a built-in algorithm. Microprocessor 260 is most efficiently chosen to alleviate as many responsibilities from any microprocessor provided for an individual subscriber module and so is most conveniently an eight bit microprocessor having eight kilobytes of internal code such as a Motorola 68HC05C8.

Received data may be stored in uninterruptable memory 270 by microprocessor 260. Data may be stored in memory 270 and jamming frequency control data downloaded when needed to a subscriber module according to Figure 3 via a serial peripheral interface bus 290 connecting microprocessor 260 with separate microprocessors 300 associated with each provided subscriber module as shown in Figure 3. Furthermore, microprocessor 260 communicates, for example, upstream frequency and amplitude control data to microprocessors associated with each service module as shown in Figure 7 over interface 620 which may comprise the same bus system as serial bus 290. A parallel bus with bus contention among the several modules and processor 260 may be substituted as appropriate for buses 290 and 620.

Variable attenuator 230 regulates the received broadband of picture carriers to a reference level while the microprocessor 260 controls the jamming carrier level outputs of associated subscriber units within the prescribed range. Microprocessor 260 consequently interprets both global communications addressed to common control circuitry or communications addressed to unique subscribers for operation of subscriber modules such as service credit or authorization commands or both. If appropriate, microprocessor 260 ignores global or addressed communications to other interdiction apparatus or to conventional converter/decoders. An example of global communications peculiar to interdiction apparatus 20 is premium channel frequency data for each premium channel or channel over which premium programming at a particular point in time is provided via headend 10. Examples of addressed communications to common control circuitry include communications comprising premium channel or programming authorization information or communications instructing the common control circuitry to provide credit to a particular subscriber. Examples of commands for operation of service modules in accordance with Figure 6 may comprise commands to set transmit level and channel for upstream transmissions in the T8 band.

If two way services over the serving cable are anticipated, the radio frequency upstream transmissions from on-premises equipment are combined at a multiplexer of reverse path signal combining circuitry according to Figure 4 for subsequent upstream transmission. A separate data transmitter is provided in the reverse path signal combining apparatus according to Figure 4 for upstream transmissions to the headend.

Serial peripheral interface buses 290, 620 may be a two way communications link by way of which microprocessors 300 (Figure 3) or microprocessors 600 (Fig. 7) associated with subscriber and service modules respectively, may, at least, provide status reports to microprocessor 260 upon inquiry. Alternatively, a microprocessor of either Figures 3 or 7 may tap into a parallel contention-type bus 290 and bid for communication to either a microprocessor 260 of common equipment or another microprocessor 300, 600 or may directly communicaste with any of the other associated microprocessors over a separate serial bus 290, 620.

Radio frequency splitter 280 provides broadband radio frequency signals comprising a broadband cable television service spectrum separately to each subscriber module according to Figure 3 that is provided.

A reverse path is required to headend 10 or common circuitry according to Figure 2 for special additional services. Consequently, a signal combiner 400 of a reverse path data transmission module according to Figures 4 and 7 is provided for receiving data communications from each of the four subscriber modules in an opposite manner to splitter 280. Certain data may be transmitted back toward the headend via an RF return path according to either Figure 4 or 7 and a forward transmission path toward the subscriber may be provided in a conventional manner according to Figures 2 and 3.

Figure 3 is an overall block schematic diagram of a subscriber module of interdiction apparatus 20 including a diplex filter 395. A microprocessor 300 is associated with a particular subscriber module and communicates with microprocessor 260 of Figure 2 over a serial peripheral interface bus. Microprocessor 300 may comprise an eight bit microprocessor equipped with only two kilobytes of code, this microprocessor being relieved of overall control responsibilities by microprocessor 260. Consequently, microprocessor 300 may conveniently comprise a Motorola 68HC05C3 microprocessor or similar unit.

A reverse path may be provided via a lowpass filter 392 of diplex filter 395 to a service module (according to Figures 4 or 7) collocated with common control circuitry as described in Figure 2 and subscriber modules according to Figure 3. Thus, a 5-30 megahertz or other lowpass band, more particularly, a 0-15 MHz lowpass band, may be provided for upstream, reverse transmissions from corresponding subscriber equipment on the subscriber premises. Such a reverse path is completed to the subscriber via terminal OS. Also, power may be transmitted up the subscriber drop to the subscriber module of Figure 3 and withdrawn at terminal OS.

The broadband radio frequency television spectrum signal from Figure 2 is provided to terminal IS. Referring to the path connecting terminal IS to terminal OS, there are connected in series a service denying switch 389, a radio frequency amplifier 387, a jamming signal combiner 385, and a high pass filter 391.

Service denying switch 389 is under control of microprocessor 300. In the event of an addressed communication from headend 10 indicating, for example, that a subscriber is to be denied service for non-payment of a bill, service denying switch 389 may be opened. In addition, a high frequency amplifier 387 may be powered down under control of microprocessor 387 whenever service is to be denied. Otherwise, amplifier 387 may be set at discrete gain levels, under microprocessor control, to provide supplemental gain to the broadband television signal if a subscriber has a plurality of television receivers (TV's and VCR's) over and above a nominal amount.

An appropriate control signal waveform output SDPS is provided by microprocessor 300 for controlling switch 389. Also the same ON/OFF control signal that is used to control the switch 389 may control the powering up and down of amplifier 387 as control signal SDHP.

Continuing the discussion of Figure 3, jamming signals are interdicted at directional combiner 385 under microprocessor control. Because of the directional characteristic of radio frequency amplifier 387, jamming signals cannot inadvertently reach the common control circuitry of Figure 2 or the serving cable. Highpass filter 391 of diplex filter 395 prevents any return path signals from reaching combiner 385 and passes the broadband spectrum including any jamming signals toward terminal OS. Reverse path signals, for example, in this embodiment may be radio frequency signals below 30 megahertz. The broadband television spectrum is presumed to be in the 50-550 megahertz range. However, interdiction of premium channel viewing may be allocated anywhere desired within a broader or discontinuous cable television spectrum to be jammed. Consequently, filters 391 and 392 are designed in accordance with this or similarly selected design criteria to block or pass broadband television or reverse path signals as required.

Microprocessor 300, responsive to common microprocessor 260, controls the frequency and power level outputs of four (or five if necessary) voltage controlled oscillators 341-344, each of which oscillators jams premium channel frequencies within an allocated continuous range of frequencies. The frequency of the oscillators is set over leads FREQ1-4 in a manner described in U.S. Patent 4,912,760. A power level and ON/OFF operation of the oscillators 341-344 are controlled over leads OPWR1-4.

Since premium programming may be transmitted anywhere in the cable television spectrum, the sum of all such allocated portions comprises the entire television spectrum to be jammed (even where non-premium channels are normally transmitted). Also, in accordance with the depicted interdiction system, the television spectrum to be jammed may comprise discontinuous portions or intentionally overlapping portions.

Figure 4 is a block diagram of off-premises interdiction apparatus 20 of Figure 1. One of four subscriber modules is shown and the details of the circuitry for jamming programming are omitted. Drop cable 66 from subscriber No. 1 is shown connected to high pass filter 391. Also connected to drop 66 is lowpass filter 392 having a cut-off frequency of 15 MHz for passing an amplitude shift keyed data signal centered at 5 MHz to an associated service module 400. Lowpass filter 392 and highpass filter 391 together comprise diplexer 395 of Figure 3.

Service module 400, shown only in simplified form, comprises a multiplexer 401 for combining signal path inputs from each one of four subscriber modules. A receiver 402 receives the data transmissions from the subscribers, and a transmitter 403 is provided for upstream transmission, preferably in the T8 band.

The seizure board of interdiction apparatus 20 is shown also in simplified form. Directional coupler 210 is shown connected for passing a high passband via highpass filter 220 toward the subscriber while lowpass filter 221 receives the output of the data transmitter 403 of service module 400 for transmission toward the headend. Lowpass filter 221 and highpass filter 220 together comprise diplexer 295 of Figure 2.

One diplex filter 295 is provided between directional coupler 210 and the common circuitry. In a similar manner to diplex filter 295, diplex filter 395 combines the forward and reverse path output and input respectively. A combined signal then is provided toward the subscribers. Thus, diplex filter 295 and diplex filter 395 provide communication paths toward the headend 100 and subscriber respectively. It is a principle of the present invention to provide one diplex filter 295 between directional coupler 210 and common circuitry according to Figure 2. It is a further principle of the present invention to provide a diplex filter 395 associated with subscriber equipment modules according to Figure 3. In a plug-in slot of off-premises equipment 20 and coupled to each diplexer is a service module according to Figures 4 and 6.

Figure 5 is a block diagram of a transaction terminal 500 in accordance with the present invention. The interdiction RF-IPPV transaction terminal is an interface between the subscriber and the interdiction system. Terminal 500, inter alia, allows the subscriber to make impulse pay-per-view purchases. Terminal 500 includes a keypad 520 having four pushbuttons 535-538 respectively labelled "ChanUp", "ChanDn", "Buy", and "Cancel" and a two-digit LED display 510. Channel display 510 can scroll through channel or event numbers until the desired event or channel is displayed.

Transaction terminal 500 includes a microprocessor 501 such as a Zilog Z86C06 which reads the four pushbuttons 535-538. controls the two-digit LED display 510, and controls the transmission of purchase information to the interdiction unit located outside the home. When no transactions are in progress, microprocessor 501 is preferably in a low-power state and power to the rest of transaction terminal 500 is switched OFF. When any of the four buttons are pressed, microprocessor 501 is activated and power is switched ON to the rest of the terminal circuitry. When the terminal is active, microprocessor 501 controls the user and communication interfaces as described below.

Terminal 500 permits a subscriber to purchase IPPV events and to also cancel purchases within a predetermined time after buying. The interdiction unit, not the terminal 500, determines whether a cancel is permitted. When a channel is selected, the terminal makes no indication that an event is available or has been previously purchased. If no keys are pressed for twenty seconds, the terminal enters an idle state.

Pressing the "ChanDn" and "ChanUp" buttons results in the respective decrementing and incrementing of the channel display of display 510. Channels "0" through "9" are displayed as single digits. The two display digits are preferably strobed on and off so that when one digit is ON the other is OFF. The strobe rate is preferably about 100 Hz, although the invention is in no way limited in this respect. Pressing "ChanDn" when the display reads "0" results in the channel number "99" being displayed. Pressing "ChanUp" when the display reads "99" results in the channel number "0" being displayed. If the subscriber continuously presses either the "ChanUp" or "ChanDn" buttons, display 510 increments/decrements through the next three channels at a rate of 2 channels per second and then continues incrementing/decrementing the display at a rate of 4 channels per second.

Prior to the purchase of an IPPV event, the terminal is in an idle or sleep state and the display is blank. When the subscriber presses any key, microprocessor 501 controls display 510 to display "37". Preferably, terminal 500 does not display the most recent channel purchased. The subscriber then uses the "ChanUp" or "ChanDn" keys on keypad 520 to select the channel of the event to be purchased. After the channel has been selected, the subscriber presses the "BUY" button on keypad 520. Display 510 then alternately displays "bY" and the selected channel number. The subscriber then presses the "BUY" button on keypad 520 a second time. Display 510 displays the channel number and the purchase information is transmitted via transmitter 540 over a carrier synthesized by ceramic resonator oscillator 530 to the interdiction unit outside the home.

The purchase of an event may be cancelled in accordance with the following procedure. Initially, terminal 500 is in the idle or sleep state and display 510 is blank. When the subscriber presses any button on keypad 520, microprocessor 501 controls display 510 to display "37". Display 510 does not display the most recent channel purchased. The subscriber uses the "ChanUp" and "ChanDn" keys on keypad 520 to select the channel of the event to be cancelled. After the channel has been selected, the subscriber presses the "CANCEL" button on keypad 520. Display 510 then alternately flashes "CA" and the selected channel number. The subscriber then presses the "CANCEL" button on keypad 520 a second time. Display 510 then displays the channel number and the cancel information is transmitted via transmitter 540 to the interdiction unit outside the unit.

Purchase windows are preset time intervals prior to or at the beginning of a pay per view event program in which a subscriber may purchase an event. Cancel windows are set as an interval of time after an event is purchased during which the purchase of the event may be canceled. Purchase and cancels windows may be set remotely by a transaction from headend 10 to the interdiction apparatus 20.

If the event is active at some other time than a current time, the subscriber will not know if he has successfully purchased the event. Since other transaction terminals will be contending for access to the same service module according to Figure 4 and 7 and since the subscriber may only cancel a purchase within a predetermined period of time after buying, purchasing and canceling must be assured. To afford this assurance, the buy or cancel message is transmitted by transmitter 540 periodically and at random times as further described below. After the transmitter 540 has completed its periodic and random transmissions, for example, occurring over a period of about twenty seconds, the microprocessor 501 may turn itself and its peripheral equipment OFF to conserve power. Furthermore, no record need be maintained in microprocessor 501 memory. For example, the decision to cancel a buy signal will be made at interdiction apparatus 20. and not at the transaction terminal.

In accordance with the invention, there are only two messages, buy and cancel. Both messages preferably contain an operation code, a channel number, and a checkbyte. Data transmission is ASK (Amplitude-Shift-Keyed) at 9600 baud with at least 0.1 milliseconds between bytes. The buy and cancel messages are three bytes long and each contain an operation code, the selected channel number, and a checkbyte. Each byte takes 1.0 millisecond and the time between bytes is allowed to be anywhere from 0.1 to 0.5 milliseconds, so the message length can be anywhere from 3.2 to 4.0 milliseconds long.

When a subscriber causes a buy or cancel message to be transmitted, transaction terminal 500 repeats the message until 450 milliseconds have passed. This is a first burst of messages. After each message, there is a random waiting period of between 15 and 30 milliseconds. The random waiting period is determined by a random number generating routine of microprocessor 501. The routine is seeded with an eight bit random number seed so that the probability of two transmitters choosing the same series of random numbers is 1 in 256 (2⁸). After the first burst of messages, there are two more bursts within the next 5.0 seconds, each burst again lasting 450 milliseconds. The time between bursts is also random and based on an 8 bit seed.

Transaction terminal 500 is coupled to a diplex filter 595 between the on-premises television receiver and the interdiction apparatus at drop 66. In an alternative embodiment, the receiver of the service module 400 and transmitter 540 of Figure 2 need not comprise a transceiver means coupled to drop 66 but may comprise a radio frequency broadcast transmitter employing over-the-air transmission. Diplex filters 395 and 595 would then not be required. Ultrasonic, infrared or low power remote control radio frequency signal broadcast and reception apparatus could be substituted.

In any transaction terminal, it is desirable that the terminal may be self-powered or utilize a very low degree of power. The apparatus shown in Figure 5 may be simply powered by three batteries 550 which may be replaced every year or so.

In a pay-per-view transaction terminal, it may be desirable to prevent purchases of programs. Switch 560, may be associated with a key or combination lock. For example, a combination of the four keys of keyboard 520 may unlock switch 560.

In an alternative embodiment, microprocessor 501 may read data from keypad 520 and sensor devices 520'. In a burglar alarm reporting terminal, the data entry comprises four or more bits of data digitally identifying sixteen portals or windows which may have been breached, while display 510 may be an alarm device. In a utility meter reading scheme, the sensor inputs may identify the type of meter, electric, gas, or water, and the data may be the reading itself. Other transaction terminals or a common terminal may be provided for these and other services such as home shopping, voting, etc.

In any case, the transaction terminal of Figure 5 further comprises a transmitter 540 for, for example, providing an amplitude shift keyed output data signal, for example, at 9600 baud and comprising operation code and data, i.e. buy channel 88, alarm at portal 12, electric meter at 373 kilowatts. The output data signal is passed through bandpass filter 592 centered at 4.92 MHz toward interdiction apparatus 20. The output data signal is precluded from interfering with television reception by 54 MHz high pass filter 591.

Figure 6 is a flow diagram illustrating a method in which a subscriber may purchase a pay per view event. The method may be implemented in software stored in the microprocessor 501 of the transaction terminal 500. The software controls the operation of microprocessor 501.

Initially, microprocessor 501 is in an idle or sleep state in which it is shut down to conserve power and display 510 is switched OFF (A-10). The microprocessor is awakened by the actuation or pressing of any key (A-12) and control passes to the main loop of the program. At block A-14, a steady channel number is displayed on display 510, for example channel 37, to provide a starting point for the subscriber. Channel 37 was chosen because it is a convenient mid-point among the presently available premium channels and reduces the number of times the "ChanUp" and/or "ChanDn" keys are pressed to reach a desired premium channel. It will be evident that any steady indication that the terminal is active can be provided on the display. A twenty second software timer is also started to initiate an active cycle. The timer may alternatively be a counter or other timing mechanism utilized in the art.

In blocks A-16 and A-18, the timer is tested to determine whether the twenty seconds has elapsed. If twenty seconds has elapsed from the initiation of the active cycle before the pressing of another key (A-18), it is assumed the subscriber has changed his mind and does not want to purchase a premium event. In such a case, the program transfers control back to block A-10 where microprocessor 501 and display 510 again enter the sleep mode.

However, if another key is pressed before the timer times out as indicated by the affirmative branch from block A-18 the program continues in accordance with which key on keypad 520 has been pressed by the subscriber. Separate loops are entered in respective blocks A-20, block A-22, and A-24. Pressing the "ChanUp" and/or "ChanDn" keys on keypad 520 (A-24) respectively increments and/or decrements the channel number on display 510 (A-30) and control returns to A-14. Repeated pressing of these keys may be used to select a desired channel.

If the "BUY" key is pressed (A-20) then the program causes microprocessor 501 to control display 510 to alternately flash the selected channel number and the two letters "bY" (A-26). The twenty-second timer is restarted at block A-26. The program then checks the twenty second timer in block A-32 to determine whether a time out has occurred. At this time, the subscriber may still change his mind about purchasing the premium event. If no further key is pressed by the subscriber (A-34), the twenty-second timer will time out and control is transferred to block A-10 where the microprocessor and display enter the sleep mode.

However, if a key is pressed before the twenty-second timer lapses, the program respectively determines whether a "BUY" key or a "CANCEL" key has been pressed in blocks A-36 and A-38. If the "BUY" key has been pressed, then microprocessor 501 causes transmission of the purchase data for that particular event to the interdiction unit 20 (A-40). After the transmission of the buy message, control is transferred to block A-14. If, however, after selecting an event to buy, the "CANCEL" key is pressed (A-38), control is immediately transferred to block A-14 and no buy message is transmitted. In this manner, a simple transaction operation can be executed to buy a premium event and transfer associated billing information to the interdiction unit or to cancel the buy command prior to transmission.

The loop entered at block A-22 describes an operation whereby a buy which has been transmitted may be cancelled. When the "CANCEL" key on keypad 520 is pressed, the display alternately flashes the selected channel (A-28) and the letters "CA" to alert the subscriber that the cancel message is ready to be transmitted. The twenty-second timer is restarted and the program determines whether a key is pressed (A-44) prior to the timing out of the timer (A-42). If there is no confirmation of the cancel message by pressing of the "CANCEL" key (A-46), the program times out and control returns to block A-10 and the microprocessor and display to go into the sleep mode. However, if the initial cancel command is confirmed in block A-46 then the microprocessor controls the transmitter to transmit the cancel message (block A-48). After the microprocessor has transmitted the cancel message to the interdiction unit, the program returns to block A-14.

Preferably, a premium program may be purchased during a purchase window fixed by headend 10. For example, a subscriber may purchase an event in a purchase window beginning thirty minutes before the scheduled start of the program and ending ten minutes after the program start. A cancel window during which a subscriber may cancel a purchase may likewise be configured by headend 10.

Referring now to Figure 7, there is shown a block schematic diagram of a service module such as an IPPV module of interdiction apparatus 20 which provides an RF data return path. The service module of Figure 7 comprises a signal multiplexer 630, a data receiver 402 (see Figure 4) including elements 635, 645, 650, 655. a microprocessor 600 which may comprise on-board RAM and a data interface 620 with motherboard processor 260. In this embodiment, there is additionally included a transmitter 403 (see Figure 4) including a BPSK modulator 680 for upstream data transmission.

The service module of Figure 7 is shown coupled between subscriber module equipment according to Figure 3 including diplexer 395 and diplex filter 295 at the front end of common circuitry according to Figure 2.

All return data communications for all services are assumed to be provided via the service module of Figure 7. Home shopping, subscriber polling, burglar alarm, pay per view and all other services are provided via the depicted circuitry and any associated data are relayed to headend 10 via transmitter 403. For example, a meter reading signal from a power company is received via the data receiver 240 of Figure 2 from headend 10, interpreted by microprocessor 260 and relayed to microprocessor 600. Microprocessor 600 in turn actuates a data transmission to, for example, relay stored data in one of three non-volatile memories 610-612 to headend 10 which had been previously transmitted by the subscriber terminal of Figure 5 on a periodic basis. As an example of a reverse data direction, also consider a burglar alarm which may be activated on the subscriber premises. The alarm may be formatted and modulated for transmission at the subscriber's premises up the drop to the data receiver. The message then is interpreted as such by the microprocessor 600 which then controls the transmitter 403 to transmit an appropriate alarm message to the headend.

A subscriber via the terminal of Figure 5 may control common circuitry or subscriber circuitry as appropriate, for example, an RF power amplifier 387 of a subscriber module according to Figure 3. In a pay-per-view transaction, the common circuitry is signaled via interface 620 of the buy command. The processor 260 determines the authorization status of the subscriber and then authorizes the channel for the time of the event. When the event is to be displayed, the jamming oscillator for the associated channel is controlled so as to not jam that channel at the time of the paid for event.

Headend 10 periodically transmits a channel, event and time of event data memory map to update random access memory associated with processor 260 over an out-of-band 108.2 MHz carrier signal as described above for transmitting addressed and global communications. Thus, additional non-volatile memory is not required in an out-of-band system for storing event/channel/time tables, such as is an interdiction cable television system. Alternatively, in an in-band cable television system, a channel, event and time table map must be stored in non-volatile memory 270 associated with processor 260 because of the relative infrequency and limited capacity of an in-band communications link compared with an out-of-band link from a headend 10 to remote CATV apparatus.

RF data transmitter 403 may transmit data in accordance with well known techniques on any data carrier in the subsplit band, for example, between 5 and 30 megahertz. However, such PSK or FSK data transmissions have been notoriously susceptible to noise interference which has been practically impossible to avoid over time. Once a clear channel is uncovered, the next day, interference from, for example, a previously undetected ham radio operator precludes its use. In a preferred embodiment, and to avoid the noisy transmission path, the return data may be spread over a large portion of the spectrum and so travel secure and hidden in the noise.

A further alternative to spread spectrum, and one which alleviates its high cost, is to provide a plurality of data transmissions over a plurality of data channels spread over the entire return path spectrum comprising, for example, the T8 band. Thus, BPSK modulator 680 may be frequency controlled to alternately provide a number of separate data transmissions over any selected one of a plurality of separate data channels. To this end, frequency synthesizer circuit 665, for example, an MC145157-2 is provided to control a phase lock loop comprising additionally low pass filter 670 and voltage controlled oscillator 675 to output a particular transmit carrier frequency in the 15.5 to 17.7 MHz T8 band. Each data transmission is complete unto itself. Statistically, at least one such transmission on one channel is assured of reaching the headend 10 on any given day.

Connected between multiplexer 401 and microprocessor 600 are a bandpass filter 635 centered at approximately 5 MHz which may be identical to the bandpass filter 592 of Figure 5. The data to be passed typically falls within the range of 4.920000 MHz plus or minus 75 KHz with an accuracy of about two per cent. Amplifier 645 amplifies the received signal from the transaction terminal of Figure 5 just before detection at, for example, diode detector 650. The detected signal is compared at comparator amplifier 655 with a voltage reference provided by reference source 652. The output of comparator 655 is a serial data stream which is input to microprocessor 600.

The received data is interpreted at microprocessor 600 and forwarded via interface 620 to common circuit microprocessor 260 as appropriate. For example, microprocessor 260 is notified of any buy or cancel transaction initiated at a transaction terminal according to Figure 5.

Data to be transmitted to the headend, for example, billing data responsive to a polling request, is forwarded over a line to BPSK modulator 680. In accordance with the invention therein described, the frequency or gain of the BPSK data signal may be controlled from the headend to avoid noisy channels and to assure sufficient signal strength through the system. Frequency control is output to the divide by N and divide by R frequency dividers of frequency synthesis circuit 665. Gain control in a step-wise manner is provided via a level control lead to the BPSK modulator 680.

To prevent "babbling", excessive unwanted data transmissions, anti-babble circuit 690 is provided sensitive to microprocessor 600 and in accordance with U.S. Patent No. 4,692,919.

Now the operation of the service module will be described in some detail in regard to authorization of impulse pay per view events. The interdiction apparatus is advised of upcoming events by number, time and channel from the headend 10 via the addressable in-band or out-of-band system described above. The service module, in turn, is told of the events by the motherboard microprocessor 260 over the motherboard interface 620, preferably a serial peripheral bus link interface. The service module receives buy and cancel information from the transactions terminal of Figure 5 in four subscribers' homes, which, in turn, may comprise up to four transaction terminals associated with four television receivers. The multiplexing circuitry 401 is controlled by microprocessor 600 to allow receipt of data from only one subscriber at a time. The microprocessor 600, for example, may scan the subscriber inputs in rapid fashion until data is sensed at one port. The switch then remains stationary at that position until the cessation of receipt of data. One multiplexer circuit which may be used comprises a 74 HCW052 integrated circuit.

The service module determines if the buy or cancel is valid, and then causes the data, if valid, to be stored in non-volatile memories 610, 611, 612. Up to a certain number, for example, sixteen, thirty-two, or sixty-four, event purchases, including channel, event ID number, and time of purchase are stored in subscriber tables tabulated by subscriber identification or address. Each subscribers table size may be controlled by the headend up to the maximum size, for example, thirty-two events. Upon polling, the service module communicates the information to the motherboard via the motherboard interface 620. The motherboard microprocessor 260 then uses the information to signal the appropriate subscriber module microprocessor 300 to unjam the channel at the predetermined time of the event. Also, RF data transmitter 680, responsive to microprocessor 600. forwards billing data to the headend 10.

Messages from the transaction terminal need only comprise an operation code of predetermined length and a channel number. A check byte, i.e. parity, checksum, or error correcting codes may be used as appropriate. The microprocessor 600 identifies the source of the transmission via the position of multiplexer 401.

The motherboard interface transactions, that is between microprocessor 260 and microprocessor 600, are somewhat more complex. For convenience, microprocessor 260 may control or initiate all communications. The communications comprise the following: a status check, an address information message to advise of subscriber addresses, an authorization request to obtain channel authorization information, an authorization poll to obtain the present channel status, a message for controlling headend communication, and an NVM or RAM memory poll or request. In each such communication from the motherboard to the service module, there is included at least an operation code. In others, there is included a channel number, an address, and/or data, as appropriate. Reply communications from the module to the motherboard microprocessor typically comprise responsive data or signals to the motherboard to request certain data.

Thus, in accordance with the present invention, a simple on-premises device is provided which provides a subscriber in a CATV interdiction system with IPPV capability. The subscriber terminal includes only a transmitter and thus does not receive commands or data from the interdiction apparatus. Data is entered into the subscriber terminal via a simple keyboard and the terminal is controlled by a small, inexpensive microprocessor. Accordingly, the benefits of impulse pay-per-view may be obtained in a CATV interdiction system without seriously compromising the cost benefits associated with the concept of removing apparatus from a subscriber's premises. Further, the problems associated with having multiple subscriber units coupled to the same drop are overcome by repeating buy and cancel messages at plural, random times.

Variations and modifications in the herein described system and the equipment, within the scope of the invention, will be apparent to those skilled in the art. For example, the subscriber terminal may be addressed by a remote control such as an infrared remote. Additionally, although a two-digit LED display is disclosed, an LED or other type of display may be utilized to display time of day, credit limits, authorization codes, and the like. Accordingly, the foregoing description should be taken as illustrative and not in a limiting sense.

## Claims

1. A service system for use in a cable television system for serving or providing service to one or more subscribers, the service system including a subscriber equipment or terminal (500) and service providing equipment (20);
the subscriber equipment or terminals (500) comprising:
a data entry device (520) for receiving subscriber input data,
a data processor (501) for generating a command from or based on the subscriber input data, and
a data transmitter (540) for transmitting the subscription command to the service providing equipment (20) in accordance with a first data format, and
the service providing equipment (20) comprising:
a data receiver (402) for receiving the subscription command transmitted from the subscriber equipment (500),
a data processor (260) for controlling authorization of service to the subscriber equipment (500) responsively to the subscription command, and
a data transmitter (403), responsive to the controlled authorization made by the data processor (260), for transmitting data to a headend (10) in accordance with a second data format;
the service providing equipment (20) being coupled by a first diplexer (295) to a distribution cable on a cable distribution plant side, and by a second diplexer (395) to a subscriber side of the service providing equipment (20) or to the subscriber equipment or terminal (500), for receiving programming from a headend (10) and selectively providing channels of said programming to the subscriber equipment or terminal (500) as authorized.

2. The service system according to claim 1, **characterized in that** the service providing equipment (20) further comprises memory (270; 610-612) for storing the data to be transmitted to the headend (10).

3. The service system according to claim 1 or claim 2, **characterized in that** the service providing equipment (20) comprises
jamming circuitry (341-344; 361-364; 385) for jamming with jamming signals at least one channel of service provided to the subscriber;
the data processor (260) of the service providing equipment (20)being responsive to said command for inhibiting said jamming circuitry (341-344; 361-364; 385) to permit said at least one channel to be received by the subscriber free of jamming signals.

4. The service system according to any of claims 1 or 3, further **characterized by** a controller (665) for controlling a frequency of operation of the data transmitter (403) in said service providing equipment (20).

5. The service system according to any of claims 1 or 3, further **characterized by** a controller (680) for controlling a signal level output of the data transmitter (403) in said service providing equipment (20).

6. The service system according to claim 5, **characterized in that** the controller for controlling the frequency of operation comprises a frequency synthesis circuit (665) coupled to the data processor (600) in said service providing equipment (20).

7. The service system according to any of claims 1 or 3, **characterized in that** the data receiver (402) comprises a bandpass filter (635) centered at approximately 5 MHz, a signal detector (650), and a comparator amplifier (655) for comparing the amplitude of an input data signal to a predetermined reference voltage.

8. The service system according to any of claims 1 or 3, **characterized in that** the first data format comprises amplitude shift keyed data at a first predetermined frequency.

9. The service system according to any of claims 1 or 3, **characterized in that** the data transmitter (403) in said service providing equipment (20) comprises a phase lock loop (605, 670, 675) and a binary phase shift key modulator (680) responsive to the data processor (260) in said service providing equipment (20) and the phase lock loop (665, 670, 675).

10. The service system according to any of claims 1 or 3, **characterized in that** the second data format comprises binary phase shift keying on a channel selected from a plurality of channels in the T8 band.

11. The service system according to any of claims 1 or 3, **characterized in that** the data processor (260) in said service providing equipment (20) is coupled to a memory (610-612) for storing data and is adapted to set a frequency of operation and an output signal level of the data transmitter (403) in said service providing equipment (20).

12. The service system according to any of claims 1 or 3, **characterized in that** the data processor (260) in said service providing equipment (20) is adapted to interpret the data received via the data receiver (402), to signal the common control circuitry (300; 389) to authorize service, and, responsive to the common control circuitry (300; 389), to control the transmission of data to the headend (10) via the data transmitter (403) in said service providing equipment (20), the service system being further **characterized by** memory (270; 610-612) within said service providing equipment (20) for storing data received from the subscriber and data received from the common control circuitry (300; 389).

13. A service apparatus for use in a serving system for a cable television system according to any of the preceding claims at a location of subscriber service providing equipment (20) adaptable for serving one or more subscribers, the service apparatus comprising:
a signal combiner (401) for receiving at least one upstream data transmission from subscriber equipment (500),
a data receiver (402) for receiving a radio frequency data transmission from the subscriber equipment (500) in a first predetermined manner,
a data processor (600) coupled to the data receiver (402), for decoding the data transmission,
an interface (620) to common control circuitry (260) for controlling authorization of service to the subscriber, and
a data transmitter (403), responsive to the common control circuitry, for transmitting data to a headend (10) in a second predetermined manner different from said first predetermined manner,
the service apparatus being coupled to a cable distribution plant side and to a subscriber side of the service providing equipment (20) respectively by first and second diplexers (295; 395).

14. The service apparatus according to claim 13 further **characterized by** a bandpass filter coupled between the first diplexer (295) and the signal combiner (401).

## Patentansprüche

1. Dienstsystem zur Verwendung in einem Kabelfernsehsystem zum Bedienen eines oder mehrerer Teilnehmer oder zum Bereitstellen eines Dienstes an einen oder mehrere Teilnehmer, wobei das Dienstsystem ein Teilnehmergerät oder ein Teilnehmerendgerät (500) und ein Dienstbereitstellungsgerät (20) einschließt;
wobei das Teilnehmergerät oder das Teilnehmerendgerät (500) umfasst:
- eine Dateneingabevorrichtung (520) zum Empfangen von Teilnehmereingabedaten,
- einen Datenprozessor (501) zum Erzeugen eines Befehls aus den Teilnehmereingabedaten oder auf der Grundlage der Teilnehmereingabedaten und
- einen Datensender (540) zum Senden des Teilnahmebefehls an das Dienstbereitstellungsgerät (20) gemäß einem ersten Datenformat, und
wobei das Dienstbereitstellungsgerät (20) umfasst:
- einen Datenempfänger (402) zum Empfangen des von dem Telinehmergerät (500) gesendeten Teilnahmebefehls,
- einen Datenprozessor (260) zum Steuern einer Autorisierung des Dienstes an das Teilnehmergerät (500) als Antwort auf den Teilnahmebefehl und
- einen Datensender (403), der auf die gesteuerte Autorisierung, die von dem Datenprozessor (260) durchgeführt wird, anspricht, zum Senden von Daten an eine Kopfeinheit (10) gemäß einem zweiten Datenformat;
wobei das Dienstbereitstellungsgerät (20) mittels eines ersten Diplexers (295) mit einem Verteilerkabel an einer Kabelverteilungsstellenseite und mittels eines zweiten Diplexers (395) mit einer Teilnehmerseite des Dienstbereitstellungsgeräts (20) oder mit dem Teilnehmergerät oder dem Teilnehmerendgerät (500) gekoppelt ist, zum Empfangen eines Programmes von einer Kopfstation (10) und zum wahlweisen Bereitstellen von Kanälen des Programmes an das Teilnehmergerät oder das Teilnehmerendgerät (500) gemäß der Autorisierung.

2. Dienstsystem nach Anspruch 1, **dadurch gekennzeichnet, dass** das Dienstbereitstellungsgerät (20) ferner einen Speicher (270; 610-612) zum Speichern der an die Kopfstation (10) zu sendenden Daten umfasst.

3. Dienstsystem nach Anspruch 1 oder 2, **dadurch gekennzeichnet, dass** das Dienstbereitstellungsgerät (20) umfasst:
- eine Störschaltung (341-344; 361-364; 385) zum Stören von zumindest einem Kanal des an den Teilnehmer bereitgestellten Dienstes mit Störsignalen;
wobei der Datenprozessor (260) des Dienstbereitstellungsgeräts (20) auf den Befehl zum Hemmen der Störschaltung (341-344; 361-364; 365) anspricht, um zu ermöglichen, dass der zumindest eine Kanal von dem Teilnehmer ohne Störsignale empfangen wird.

4. Dienstsystem nach einem der Ansprüche 1 oder 3, ferner **gekennzeichnet durch** eine Steuerungseinrichtung (665) zum Steuern einer Betriebsfrequenz des Datensenders (403) in dem Dienstbereitstellungsgerät (20).

5. Dienstsystem nach einem der Ansprüche 1 oder 3, ferner **gekennzeichnet durch** eine Steuerungseinrichtung (680) zum Steuern eines Ausgangssignalpegels des Datensenders (403) in dem Dienstbereitstellungsgerät (20).

6. Dienstsystem nach Anspruch 5, **dadurch gekennzeichnet, dass** die Steuerungseinrichtung zum Steuern der Betriebsfrequenz eine Frequenzsyntheseschaltung (665) umfasst, die mit dem Datenprozessor (600) in dem Dienstbereitstellungsgerät (20) gekoppelt ist.

7. Dienstsystem nach einem der Ansprüche 1 oder 3, **dadurch gekennzeichnet, dass** der Datenempfänger (402) ein Bandpassfilter (635) mit einer Mittenfrequenz von etwa 5 MHz, einen Signaldetektor (650) und einen Vergleichsverstärker (655) zum Vergleichen der Amplitude eines Eingangsdatensignals mit einer vordefinierten Referenzspannung umfasst.

8. Dienstsystem nach einem der Ansprüche 1 oder 3, **dadurch gekennzeichnet, dass** das erste Datenformat Amplitudenumtastdaten bei einer ersten vorbestimmten Frequenz umfasst.

9. Dienstsystem nach einem der Ansprüche 1 oder 3, **dadurch gekennzeichnet, dass** der Datensender (403) in dem Dienstbereitstellungsgerät (20) einen Phasenregelkreis (605, 670, 675) umfasst und einen binären Phasenumtastmodulator (680), der auf den Datenprozessor (260) in dem Dienstbereitstellungsgerät (20) und den Phasenregelkreis (665, 670, 675) anspricht.

10. Dienstsystem nach einem der Ansprüche 1 oder 3, **dadurch gekennzeichnet, dass** das zweite Datenformat eine binäre Phasenumtastung auf einem aus einer Mehrzahl von Kanälen in dem T8-Band ausgewählten Kanal umfasst.

11. Dienstsystem nach einem der Ansprüche 1 oder 3, **dadurch gekennzeichnet, dass** der Datenprozessor (260) in dem Dienstbereitstellungsgerät (20) mit einem Speicher (610-612) zum Speichern von Daten gekoppelt ist und daran angepasst ist, eine Betriebsfrequenz und einen Ausgangssignalpegel des Datensenders (403) in dem Dienstbereitstellungsgerät (20) einzustellen.

12. Dienstsystem nach einem der Ansprüche 1 oder 3, **dadurch gekennzeichnet, dass** der Datenprozessor (260) in dem Dienstbereitstellungsgerät (20) daran angepasst ist, die über den Datenempfänger (402) empfangenen Daten zu interpretieren, der gemeinsamen Steuerschaltung (300; 389) zu signalisieren, einen Dienst zu autorisieren, und ansprechend auf die gemeinsame Steuerschaltung (300; 389) das Senden der Daten an die Kopfstation (10) über den Datensender (403) in dem Dienstbereitstellungsgerät (20) zu steuern, wobei das Dienstsystem ferner durch einen Speicher (270; 610-612) in dem Dienstbereitstellungsgerät (20) zum Speichern der von dem Teilnehmer erhaltenen Daten und der von der gemeinsamen Steuerschaltung (300; 389) erhaltenen Daten gekennzeichnet ist.

13. Dienstvorrichtung zur Verwendung in einem Dienstsystem für ein Kabelfernsehsystem gemäß einem der vorgegangenen Ansprüche an einer Stelle eines Teilnehmerdienstbereitstellungsgeräts (20), das zum Bedienen eines oder mehrerer Teilnehmer anpassbar ist, wobei die Dienstvorrichtung umfasst:
- einen Signalkombinator (401) zum Empfangen mindestens einer Datenübertragung in Aufwärtsrichtung von einem Teilnehmergerät (500),
- einen Datenempfänger (402) zum Empfangen einer Hochfrequenzdatenübertragung von dem Teilnehmergerät (500) auf eine erste vorbestimme Weise,
- einen Datenprozessor (600) zum Decodieren der Datenübertragung, der mit dem Datenempfänger (402) gekoppelt ist,
- eine Schnittstelle (620) mit einer gemeinsamen Steuerschaltung (260) zum Steuern der Autorisierung eines Dienstes an den Teilnehmer und
- einen Datensender (403), der auf die gemeinsame Steuerschaltung anspricht, zum Senden von Daten an eine Kopfstation (10) auf eine zweite vorbestimmte Weise, die von der ersten vorbestimmten Weise unterschiedlich ist,
wobei die Dienstvorrichtung jeweils über einen ersten und einen zweiten Diplexer (295; 395) mit einer Kabelverteilerstellenseite und mit einer Teilnehmerseite des Dienstbereitstellungsgeräts (20) gekoppelt ist.

14. Dienstvorrichtung nach Anspruch 13, ferner **gekennzeichnet durch** ein Bandpassfilter, das zwischen den ersten Diplexer (295) und den Signalkombinator (401) gekoppelt ist.

## Revendications

1. Système de service destiné à être utilisé dans un système de télévision par câble pour servir ou fournir un service à un ou plusieurs abonnés, le système de service comportant un équipement ou terminal (500) d'abonné et un équipement (20) de fourniture de service ;
l'équipement ou terminal (500) d'abonné comprenant :
un dispositif (520) d'entrée de données pour recevoir des données d'entrée d'abonné,
un processeur (501) de données pour générer un ordre émanant des données d'entrée d'abonné, ou fondé sur celles-ci, et
un transmetteur (540) de données pour transmettre l'ordre d'abonnement à l'équipement (20) de fourniture de service suivant un premier format de données, et
l'équipement (20) de fourniture de service comprenant :
un récepteur (402) de données pour recevoir l'ordre d'abonnement transmis à partir de l'équipement (500) d'abonné,
un processeur (260) de données pour commander l'autorisation de service pour l'équipement (500) d'abonné, en réponse à l'ordre d'abonnement, et
un transmetteur (403) de données, sensible à l'autorisation commandée faite par le processeur (260) de données, pour transmettre des données à une tête de réseau (10) suivant un deuxième format de données ;
l'équipement (20) de fourniture de service étant couplé par un premier diplexeur (295) à un câble de distribution sur un côté d'installation de distribution par câble, et par un deuxième diplexeur (395) sur un côté d'abonné de l'équipement (20) de fourniture de service ou à l'équipement ou terminal (500) d'abonné, pour recevoir un programme en provenance d'une tête de réseau (10) et pour fournir sélectivement des canaux dudit programme à l'équipement ou terminal (500) d'abonné, si cela est autorisé.

2. Système de service selon la revendication 1, **caractérisé en ce que** l'équipement (20) de fourniture de service comprend de plus une mémoire (270; 610-612) pour stocker les données destinées à être transmises à la tête de réseau (10).

3. Système de service selon la revendication 1 ou 2, **caractérisé en ce que** l'équipement (20) de fourniture de service comprend
un circuit de brouillage (341 - 344, 361 - 364, 385) pour brouiller, avec des signaux de brouillage au moins un canal de service fourni à l'abonné ;
le processeur (260) de données de l'équipement (20) de fourniture de service étant sensible audit ordre pour innhiber ledit circuit de brouillage (341 - 344 ; 361 - 364 ; 385) afin de permettre audit au moins un canal d'être reçu par l'abonné, sans signaux de brouillage.

4. Système de service selon l'une quelconque des revendications 1 ou 3, **caractérisé en outre par** un dispositif de commande (665) pour commander une fréquence de fonctionnement du transmetteur (403) de données dans ledit équipement (20) de fourniture de service.

5. Système de service selon l'une quelconque des revendications 1 ou 3, **caractérisé en outre par** un dispositif de commande (680) pour commander une sortie de niveau de signal du transmetteur (403) de données, dans ledit équipement (20) de fourniture de service.

6. Système de service selon la revendication 5, **caractérisé en ce que** le dispositif de commande pour commander la fréquence de fonctionnement comprend un circuit (665) de synthèse de fréquence couplé au processeur (600) de données dans ledit équipement (20) de fourniture de service.

7. Système de service selon l'une quelconque des revendications 1 ou 3, **caractérisé en ce que** le récepteur (402) de données comprend un filtre passe-bande (635) centré approximativement à 5 MHz, un détecteur (650) de signal, et un amplificateur comparateur (655) pour comparer l'amplitude d'un signal de données d'entrée à une tension de référence prédéterminée.

8. Système de service selon l'une quelconque des revendications 1 ou 3, **caractérisé en ce que** le premier format de données comprend des données décalées en amplitude à une première fréquence prédéterminée.

9. Système de service selon l'une quelconque des revendications 1 ou 3, **caractérisé en ce que** le transmetteur (403) de données dans ledit équipement (20) de fourniture de service comprend une boucle (605, 670, 675) à verrouillage de phase et un modulateur (680) à décalage de phase binaire sensible au processeur (260) de données dans ledit équipement (20) de fourniture de service et à la boucle (665, 670, 675) de verrouillage de phase.

10. Système de service selon l'une quelconque des revendications 1 ou 3, **caractérisé en ce que** le deuxième format de données comprend un décalage de phase binaire sur un canal sélectionné à partir d'une pluralité de canaux dans la bande T8.

11. Système de service selon l'une quelconque des revendications 1 ou 3, **caractérisé en ce que** le processeur (260) de données dans ledit équipement (20) de fourniture de service est couplé à une mémoire (610 - 612) pour stocker des données et est apte à établir une fréquence de fonctionnement et un niveau de signal de sortie du transmetteur (403) de données dans ledit équipement (20) de fourniture de service.

12. Système de service selon l'une quelconque des revendications 1 ou 3, **caractérisé en ce que** le processeur (260) de données dans ledit équipement (20) de fourniture de service est apte à interpréter les données reçues par l'intermédiaire du récepteur (402) de données, pour signaler au circuit de commande commun (300 ; 389) d'autoriser le service, et, en réponse au circuit de commande commun (300 ; 389), pour commander la transmission de données à la tête de réseau (10) par l'intermédiaire du transmetteur (403) de données dans ledit équipement (20) de fourniture de service, le système de service étant en outre **caractérisé par** une mémoire (270 ; 610 - 612) à l'intérieur dudit équipement (20) de fourniture de service pour stocker des données reçues en provenance de l'abonné et des données reçues en provenance du circuit de commande commun (300 ; 389).

13. Appareil de service destiné à être utilisé dans un système de service pour un système de télévision par câble selon l'une quelconque des revendications précédentes, à un emplacement d'équipement (20) de fourniture de service d'abonné adaptable pour servir un ou plusieurs abonnés, l'appareil de service comprenant :
un mélangeur (401) de signaux pour recevoir au moins une transmission de données en amont en provenance d'un équipement (500) d'abonné,
un récepteur (402) de données pour recevoir une transmission de données de radiofréquence en provenance de l'équipement (500) d'abonné, d'une première manière prédéterminée,
un processeur (600) de données couplé au récepteur (402) de données, pour décoder la transmission de données,
une interface (620) pour le circuit de commande commun (260) pour commander l'autorisation de service à l'abonné, et
un transmetteur (403) de données, sensible au circuit de commande commun, pour transmettre des données à une tête de réseau (10), d'une deuxième manière prédéterminée différente de ladite première manière prédéterminée,
l'appareil de service étant couplé à un côté d'installation de distribution par câble et à un côté d'abonné de l'équipement (20) de fourniture de service respectivement par un premier et un deuxième diplexeurs (295 ; 395).

14. Appareil de service selon la revendication 13, **caractérisé en outre par** un filtre passe-bande couplé entre le premier diplexeur (295) et le mélangeur (401) de signaux.
